# EUROPÄISCHE PATENTANMELDUNG

(11) **EP 1 319 501 A1**
(43) Veröffentlichungstag der Anmeldung: **18.06.2003**
(21) Anmeldenummer: 02027576.4
(22) Anmeldetag: 10.12.2002
(51) Int. Cl.: B32B 21/00, E04C 2/32

(54) **Platte aus einem planebenen Kern und mit diesem verbundenen gewölbten Teilen und Verfahren zur Herstellung einer derartigen Platte**

(30) Priorität: 17.12.2001 DE 10161929
(71) Anmelder: Trespa International B.V., 6002 SM Weert (NL)
(72) Erfinder: Plug, Hans, Dr., 6107 CJ Stevensweert (NL); Le Clercq, Glen, 6004 DC Weert (NL)

(57) **Zusammenfassung**

Eine Platte 1, die eine heißverpresste Pressstoffplatte ist, besitzt einen plattenförmigen Kern aus einer vorgefertigten planebenen Platte aus Holz-, Cellulosefasern oder Holz- und Cellulosefasern, die mit Hitze gehärtetem Phenol-Formaldehydharz imprägniert sind. Der Kern ist mit vorgefertigten gewölbten Teilen aus Holz-, Cellulosefasern oder Holz- und Cellulosefasern, die auf einer Kernfläche 7 angeordnet sind, unter Druck heiß verpresst. Die Teile 2, 3 sind gleichmäßig, ungleichmäßig oder gleich- und ungleichmäßig über die Kernfläche 7 verteilt. Die Umrisse und die Höhen der gewölbten Teile sind gleich groß oder unterschiedlich groß, ebenso die Formen der Teile. Auf einer Front- bzw. Rückseite 4 bzw. 5 der Platte 1 befindet sich eine Dekorschicht 11.

## Beschreibung

Die Erfindung betrifft eine Platte aus einem planebenen Kern und mit diesem verbundenen gewölbten Teilen, wobei der Kern vorgefertigt ist und die Teile vorgefertigt oder durch Verpressen von losem Fasermaterial herstellbar sind und gegebenenfalls eine oder beide Seiten der Platte mit einer Dekorschicht ausgerüstet sind, und Verfahren zur Herstellung einer derartigen Platte.

Aus der EP-A 1 080 879 ist eine heißverformbare Pressstoffplatte bekannt, die als Kern eine vorgefertigte ebene Platte aus Holz- und/oder Cellulosefasern aufweist, die mit hitzehärtbarem Phenol-Formaldehydharz imprägniert sind. Die ebene Platte ist in den sich gegenüberliegenden Randbereichen durch Streifen mit unterschiedlichen Querschnitten verdickt. Die beiden Oberflächen des Kerns sind mit Dekorschichten ausgerüstet. Die Streifen für die Verdickung besitzen bevorzugt einen rechteckartigen Querschnitt, von dem die eine Querschnittseite bogenförmig bzw. gewölbt verläuft. In dieser europäischen Patentanmeldung ist auch ein Verfahren zur Herstellung der heißverformbaren Pressstoffplatte beschrieben, das sich dadurch auszeichnet, dass eine vorgefertigte Platte in eine geöffnete Presse eingelegt wird, die eine mit einer oder mehreren Mulden ausgestattete Pressform und eine glatte Pressform enthält. Danach wird das gleiche Material, aus dem die Platte gefertigt ist, entlang einem oder mehrerer Randbereiche der Platte angeordnetund eine oder zwei Dekorschichten auf die Oberfläche bzw. Oberflächen der der mit dem Material zusammengefügten Platte aufgebracht und danach die zwischen den Pressformen befindlichen Teile heißverpresst. Die so gefertigten Platten sind einseitig gewölbt, die Rückseiten dieser Platten sind planeben.

Für den Innenausbau in Küche und Bad, die Fassadenverkleidung von Gebäuden, die Einrichtung von Chemie- und Physiklabors werden Platten hergestellt, die gerundete Kanten und gebogene Form aufweisen. Diese Platten besitzen häufig eine dekorative Oberfläche und die Ausgangsmaterialien sind Trägerschichten, die miteinander verklebt werden.

So ist aus der DE-B 2 823 669 ein Verfahren bekannt, bei dem das Erwärmen der Platte in einem solchen Ausmaß vorgenommen wird, dass die Trägerlagen oder die Lagengruppen, die aus mehreren miteinander verbundenen Trägerlagen bestehen, die mittels eines thermoplastischen Bindemittels miteinander verbunden sind, sich beim Verformen im erwärmten Verformungsbereich in Richtung der Plattenoberfläche gegeneinander verschieben und dass während oder nach dem Verformen oder allein nach dem Verformen jeweils zumindest bis zum Wiedererstarren des Bindemittels infolge Abkühlung ein Auftrennen derBindemittelfugen durch Formhalteorgane der Biegeeinrichtung verhindert wird.

Auf diese Weise wird eine Kunstharz-Schichtpressstoffplatte aufgebaut, die aus mehreren miteinander heißverpressten, mit duroplastischen Bindemitteln imprägnierten Trägerlagen besteht und bei einer Verformungstemperatur verformbar ist, die höher als die Heißpresstemperatur ist. Zwischen den Trägerlagen oder zwischen Lagengruppen aus jeweils mehreren miteinander verbundenen Trägerlagen befinden sich Schichten aus einem thermoplastischen Bindemittel, dessen Schmelztemperatur gleich der /oder niedriger als die Verformungstemperatur ist.

In der EP-B-0 081 147 ist eine dekorative, für Außenanwendungen geeignete Bauplatte beschrieben, die aus einem gepressten Kern aus Fasern besteht, die von Hitze gehärtetem Phenol-Formaldehydharz umgeben sind und eine dekorative Schicht auf einer oder beiden Oberflächen des Kerns aufweist. Der Kern besteht aus Holzfasern und/oder Cellulosefasern mit einer maximalen Länge von 20 mm, die mit einem hitzehärtbarem Phenol-Formaldehydharz in wässriger Lösung oder Dispersion beschichtet sind. Eine Ausführungsform dieser Bauplatte wird in der Weise hergestellt, dass eine oder mehrere übereinander angeordnete, mechanisch vorverdichtete Schichten auf Basis von Holzteilchen, welche mit dem hitzehärtbaren Phenol-Formaldehydharz imprägniert sind, unter Ausbildung des Kerns der Bauplatte in der Hitze verpresst werden, wodurch das Kunstharz gehärtet wird. Die Oberflächen des Kerns werden mit einer oder zwei dekorativen Schichten versehen. Die mit der Harzlösung bzw. Harzdispersion imprägnierten Holzfasern werden bis zu einer Restfeuchte von 2 bis 15 Gew.-% getrocknet, wobei das Harz teilweise aushärtet. Die getrockneten Fasern formen in Wirrlage eine bahnförmige Matte, die mechanisch vorverdichtet und danach in einer oder mehreren übereinander angeordneten Schichten unter harzhärtenden Bedingungen erhitzt und verpresst wird. Die dekorativen Schichten werden auf die vorverdichtete Matte oder nach dem Verpressen auf die Kernschicht aufgebracht.

Bei solchen heißverformten dekorativen Hochdruck-Schichtpressstoffplatten (HPL) handelt es sich um sogenannte Kompaktformteile, deren Aufbau entweder dem von Kompaktplatten nach EN 438-1 bzw. DIN 16926 bzw. ISO 4586 entspricht oder einem derartigen Aufbau ähnlich ist. Die Komponenten bzw. Schichten derartiger Kompaktplatten bestehen aus den gleichen Materialien und werden in den gleichen Hochdruckpressen hergestellt wie sonstige Platten auf Basis härtbarer Harze und können je nach Formungsverfahren fallweise Klebeschichten enthalten. Kompaktformteile sind selbsttragende Elemente mit stabilen Rundungen und haben wie Kompaktplatten ein- bzw. beidseitige dekorative Farbgebung mit glatter oder strukturierter Oberfläche und weisen im allgemeinen geschlossene Schnittkanten auf.

Es sind auch Verfahren bekannt, bei denen melaminbeharzte Dekor- und phenolbeharzte Kernpapierbahnen in S-förmigen oder L-förmigen Strukturen definierter Abmessung unter Hitze und hohem Druck gehärtet werden. Bei einem anderen bekannten Verfahren wird in Bereichen der vorzunehmenden Biegung durch Einlegen von Trennstreifen bei der Herstellung die Dicke der Kompaktplatten einseitig begrenzt, wobei sich die Dicke nach dem gewünschten Biegeradius richtet. In den dünneren Plattenbereichen ist dann eine nachträgliche Formgebung in stationären Biegeanlagen unter Hitze möglich. Nach Abkühlung in einer Spannvorrichtung bleiben die Teile geformt, wobei die mechanische Festigkeit der Rundungsbereiche durch die verbleibende Wandstärke bestimmt ist.

Bei einem weiteren bekannten Verfahren wird die Kompaktplatte in den zu verformenden Bereichen einseitig bis auf eine geringe Wandstärke ausgefräst, die vom gewünschten Biegeradius abhängt und in stationären Biegeanlagen unter Wärme geformt. Die ausgefrästen Hohlräume werden noch in der Spannvorrichtung mit härtenden Kunstharzen ausgegossen oder durch Einsetzen von Paßstücken verfestigt.

Die Herstellung von Formteilen aus Kompaktplatten und einer nachträglich aufgeklebten HPL-Kompaktplatte geschieht bei einem weiteren bekannten Verfahren in der Weise, dass die Kompaktplatte vor der Klebung an den später zu formenden Stellen angefräst oder mit einer Distanzleiste ausgefüllt wird. Eine weitere Möglichkeit besteht darin, zwei Kompaktplatten als Träger im vorgesehen Winkel zusammenzufügen und eine der Kanten zu einer konvexen Rundung abzufräsen. Auf diese abgefräste Fläche wird dann die HPL-Kompaktplatte geklebt. Durch rückseitiges Ausfräsen bzw. Entfernen der Distanzleiste können konkave Rundungen hergestellt werden.

Bei der Herstellung von kompakten Formteilen aus HPL-Einzellagen werden diese Einzellagen in Dicken bis zu 1 mm mit beidseits geschliffenen Kernplatten zu Plattenpaketen gewünschter Dicke geschichtet und dann in Spannformen mit beispielsweise lösungsmittelfreien Zweikomponentenklebern zusammengeklebt. Die fugendichte Klebung der nichtsaugenden HPL-Einzellagen stellthohe Anforderungen an die Zweikomponentenkleber. Die geschichteten Plattenpakete werden anschließend in einer Biegevorrichtung in gewünschter Weise gebogen.

Die bekannten Verfahren, bei denen das Material im Verformungsbereich ausgefräst wird und die Hohlräume in dem Mantel in der Spannvorrichtung mit Kunstharzgießmasse ausgegossen oder durch Einsetzen von Paßstücken verfestigt werden, sind wegen der großen Anzahl der Verarbeitungsschritte wie Ausfräsen, Biegen, Ausgießen bzw. Anfertigen von Paßstücken, Nachbearbeitung aufwendig und die Produktqualität läßt zu wünschen übrig, da beispielsweise zylindrische Formen oft unregelmäßig geformt sind, an den Elementenenden vielfältige Haarrisse auftreten und das Material nur als einseitig dekoratives Element einsetzbar ist. Bei der Verformung in einer Formpresse ist zwar die Produktqualität gut, jedoch sind die Matrizen für die Formpressung sehr teuer und wegen ihrer mangelnden Flexibilität nicht einsetzbar für unterschiedliche Formen.

Die Verformbarkeit von nichtausgehärteten, zu einer Platte zusammengeschichteten Lagen aus HPL-Kompaktplatten, wobei die Außenseiten einer solcher Platte mit Melamin- oder Acrylharzdeckschichten ausgerüstet sind, wird durch die geringe Dehnbarkeit der dekorativen Deckschichten begrenzt.

Aufgabe der Erfindung ist es, eine Platte der eingangs beschriebenen Art so weiter zu entwickeln, dass eine Platte mit regel- oder unregelmäßigen Erhebungen bzw. Wölbungen oder mit Wellungen der Front- und Rückseite, der Rück- oder der Frontseite erhalten wird und durch die spezielle Gestaltung der Front- und Rückseite originäre differenzierte Farb-/Helligkeitseffekte beim Betrachten hervorgerufen werden.

Diese Aufgabe wird erfindungsgemäß in der Weise gelöst, dass die Teile regelmäßig, unregelmäßig oder regelmäßigund unregelmäßig gewölbtund gleichmäßig, ungleichmäßig oder gleichmäßig und ungleichmäßig über eine Front- und Rückseite, die Front- oder Rückseite der Platte verteilt sind.

In Ausgestaltung der Erfindung ist das Material der Platte Hochdrucklaminat oder Holz. Dabei bestehen der Kern und die Teile aus dem gleichen Material oder aus verschiedenen Materialien.

In Ausgestaltung der Erfindung sind die Teile mit der einen Kernfläche verbunden, welche die gewölbte Frontseite der Platte bildet und ist die Rückseite der Platte planeben geformt. In weiterer Ausgestaltung sind die Teile mit jeder der beiden Kernflächen verbunden und formen derart eine gewölbte Front- und eine gewölbte Rückseite der Platte. Ebenso ist eine Ausführungsform möglich, bei der die Teile mit der einen Kernfläche verbunden sind, welche die gewölbte Rückseite der Platte bildet und bei der die Frontseite der Platte planeben geformt ist. Die Teile bestehen aus Erhebungen, die Grund- bzw. Basisflächen mit kreis-, ellipsen-, parabelförmigen Querschnitten und Kuppen als Scheitelpunkte der Erhebungen aufweisen. Eine Platte mit gewölbter Front- und Rückseite, gewölbter Frontseite und planebener Rückseite oder gewölbter Rückseite und planebener Vorderseite weist ein durchgängig gewölbtes 3D (dreidimensionales) Profil auf. Ebenso können Platten geformt werden, bei denen Vorder- und Rückseite planeben sind.

In einer bevorzugten Ausführungsform ist die Platte eine heißverpresste Pressstoffplatte, deren Kern eine vorgefertigte planebene Platte aus Holz- und/oder Cellulosefasern und/oder Kraft-Papier ist, die mit hitzegehärtetem Phenol-Formaldehydharz imprägniert sind und ist die planebene Platte mit vorgefertigten gewölbten Teilen aus Holz- und/oder Cellulosefasern und/oder Kraft-Papier unter Druck heißverpresst.

In Ausgestaltung der Erfindung besteht die Dekorschicht aus einer Kunststoff-, Papier- oder Holzlage, auf die eine Lackschicht aufgebracht ist und hat ein Flächengewicht von 60 bis 420 g/m², insbesondere von 140 bis 300 g/m². Eine Lackschicht ist nicht in jedem Fall vorhanden. Zweckmäßigerweise ist die Dekorschicht ein mit Melaminharz imprägniertes Dekorpapier.

Bei einer Pressstoffplatte besteht der Kern, je nach gewünschter Dicke, aus einer oder mehreren ebenen, rechteckförmigen Lagen aus Kraft-Papier, Holz-, Cellulosefasern oder Holz- und Cellulosefasern, die mit hitzehärtbarem Phenol-Formaldehydharz imprägniert sind. Eine derartige vorgefertigte Platte ist aus der EP-B 0 081 147 bekannt. Dabei werden mehrere übereinander angeordnete, mechanisch vorverdichtete Schichten unter Hitzeanwendung miteinander verpresst. Der so vorgefertigte ebene Kern wird auch als pre-peg bezeichnet. Die zuvor erwähnten ebenen rechteckförmigen Lagen können ebenso nur aus Festholz gefertigt sein, es sind dann die gewölbten Teile gleichfalls aus Festholz gefertigt. In einer Presse werden dann dieser plattenförmige Kern aus Festholz und die gewölbten Teile aus dem gleichen Material unter Hitzeanwendung mit Hilfe eines Klebers miteinander verklebt.

Im Rahmen der Erfindung wird auch ein Verfahren zur Herstellung von Pressstoffplatten geschaffen, das mit einer sehr geringen Anzahl von Verfahrensschritten auskommt und in der Weise arbeitet, dass eine oder zwei Dekorschichten in Pressformen einer geöffneten Presse, von der eine oder beide Pressformen Mulden aufweisen, angeordnet werden, ein vorgefertigter planebener Kern aus Kraft-Papier, Holzfasern, Cellulosefasern und/oder Festholz oder einem Gemisch aus Holz- und Cellulosefasern in die offene Presse eingelegt wird, die Mulden mit vorgefertigten Teilen aus Kraft-Papier, Holzfasern, Cellulosefasern und/oder Festholz oder losen harzimprägnierten Holzfasern, Cellulosefasern und/oder Kraft-Papierschnitzeln oder einem Gemisch aus Holz- und Cellulosefasern aufgefüllt und alle zwischen den Pressformen befindlichen Materialien heißverpresst werden.

Eine Ausgestaltung des Verfahrens geschieht durch Anordnen einer oder zweierDekorschichten in Pressformen einer geöffneten Presse, deren beide Pressformen Mulden aufweisen, Einlegen eines vorgefertigten planebenen Kerns aus Kraft-Papier, Holz- und/oder Cellulosefasern oder Festholz in die offene Presse, Auffüllen der Mulden mit vorgefertigten Teilen aus Kraft-Papier, Holzfasern, Cellulosefasern und/oder Festholz oder Mischungen aus Holz- und Cellulosefasern oder Auffüllen mit losen harzimprägnierten Holzfasern, Cellulosefasern und/oder Kraft-Papierschnitzeln oder miteinander vermischten harzimprägnierten Holz- und Cellulosefasern und Heißverpressen aller zwischen den Pressformen befindlichen Materialien. In bevorzugter Weise werden die Materialien in der Presse mit einer Temperatur von 130 bis 180°C und einem Druck von 60 bis 110 bar miteinander verpresst.

Mit der Erfindung werden die Vorteile erzielt, dass auf sehr einfache Weise die Front- und Rückseite einer Platte mit gewölbten Erhöhungen, die gleiche oder unterschiedliche Formen besitzen, variabel und gewölbt ausgestaltet werden, wodurch selbst bei monochromer Farbgebung der Plattenseiten bzw. -oberflächen ein optisch differenzierter, durch Farb-/Helligkeitseffekte aufgelockerter Farbeindruck entsteht.

Die Erfindung wird im Folgenden anhand der Zeichnungen näher erläutert. Es zeigen:
- Fig. 1: eine schematische Draufsicht auf einen vorgefertigten plattenförmigen Kern und mit dem Kern verbundenen Teile einer erfindungsgemäßen Platte,
- Fig. 2: in schematischer Schnittansicht eine geöffnete Presse mit einer planebenen und einer mit Mulden ausgestalteten Pressform, mit Dekorschichten, eingelegtem Kern und vorgefertigten gewölbten Teilen, die Erhöhungen der Platte nach dem Verpressen bilden,
- Fig. 3: eine Schnittansicht einer fertigen Platte, deren Front- und Rückseite eine Dekorschicht aufweist,
- Fig. 4: in schematischer Schnittansicht eine geöffnete Presse, ähnlich der Presse nach Fig. 2, mit zwei Pressformen, von denen jede mit Mulden ausgestattet ist,
- Fig. 5: schematisch mit Holz- und/oder Cellulosefasern gefüllte Mulden einer Pressform,
- Fig. 6: eine erfindungsgemäße Platte mit Erhebungen auf der Frontseite und planebener Rückseite in perspektivischer Ansicht, und
- Fig. 7: eine Draufsicht auf eine aus erfindungsgemäßen Platten zusammengesetzte Fassadenverkleidung, die eine durch Erhebungen gewölbte oder gewellte Frontseite hat.

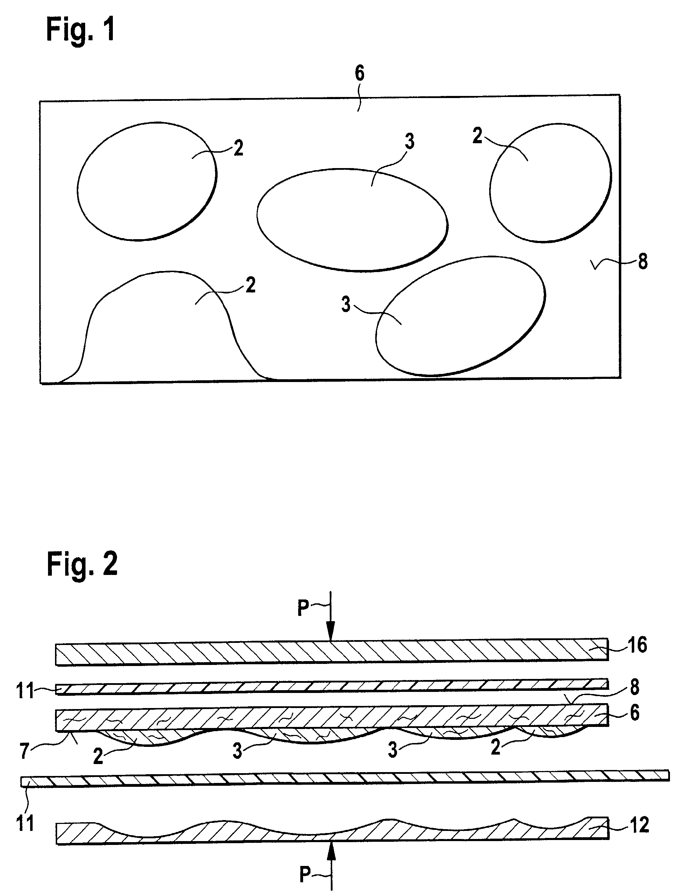

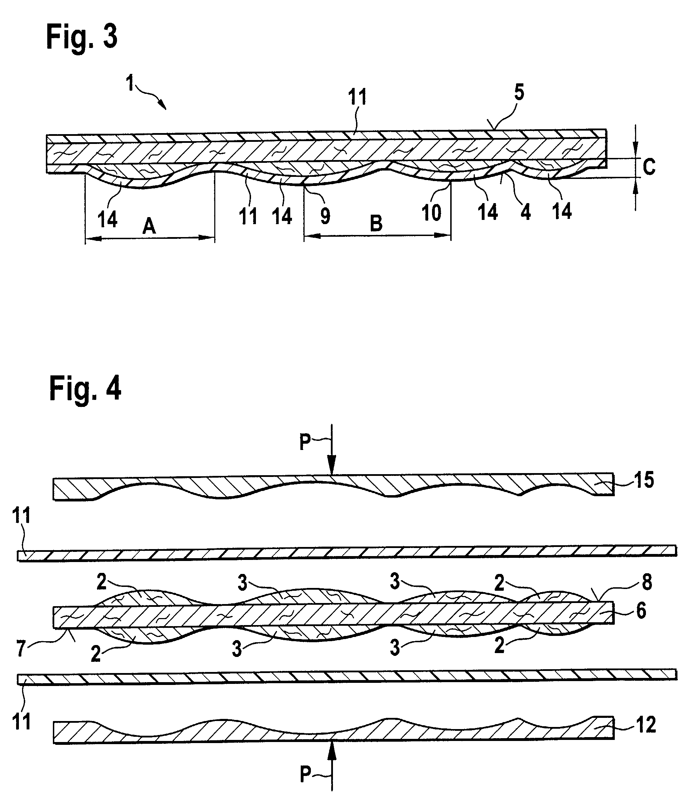

Fig. 1 zeigt in schematischer Draufsicht einen plattenförmigen Kern 6 mit Teilen 2 und 3, die beispielsweise mit der einen Kernfläche 8 verbunden sind, welche eine Frontseite 4 einer fertigen Platte 1 bildet, wie sie in der Schnittansicht der Fig. 3 dargestellt ist.

Für die Teile 2 und 3 wird das gleiche Material wie für den plattenförmigen Kern 6 verwendet, jedoch können für die Teile 2, 3 und den Kern 6 unterschiedliche Materialien eingesetzt werden. Bei bevorzugten Ausführungsformen der Erfindung kann es sich beim Kern 6 und den Teilen 2 und 3 um Holz-, Cellulosefasern oder Mischungen aus Holz- und Cellulosefasern, die mit einem Harz imprägniert sind, oder um Festholz handeln, wobei eine bis mehrere Schichten aus Kraft-Papier den Kern 6 und die Teile 2, 3 ein- oder beidseitig abdecken können bzw. abdecken.

Die Figuren 1 bis 7 und die zugehörige Beschreibung beziehen sich auf die bevorzugten Ausführungsformen der Erfindung, d.h. auf Platten aus Hochdrucklaminat oder Holz.

Der in Fig. 1 gezeigte Kern 6 wird beispielsweise aus Trägerlagen, bestehend aus Holzund/oder Cellulosefaserteilchen nach dem in der EP-B-0 081 147 beschriebenen Verfahren, unter Weglassung von dekorativen Schichten, vorgefertigt. Zusätzlich sind noch Lagen aus Kraft-Papier auf einer oder beiden Kernseiten vorgesehen. Dies geschieht derart, dass eine oder mehrere übereinander angeordnete, mechanisch vorverdichtete Schichten auf der Basis von Holz-und/oder Cellulosefaserteilchen, welche mit einem hitzehärtbarem Phenol-Formaldehydharz imprägniert sind, zusammen mit Kraft-Papierlagen unter Hitzeanwendung verpresst werden, wobei das Kunstharz gehärtet wird. Hierzu werden Holzfasern und/oder Cellulosefasern mit einer maximalen Länge von 20 mm mit mehr als 15 und bis zu 90 Gew.-% des hitzehärtbaren Phenol-Formaldhydharz, bezogen auf das Fasergewicht, in wässriger Lösung oder Dispersion beschichtet oder imprägniert. Die Fasern werden bis zu einer Restfeuchte von 2 bis 15 Gew.-% getrocknet, wobei das Harz teilweise aushärtet und die getrockneten Fasern in Wirrlage zu einer bahnförmigen Matte geformt werden. Die Matte wird mechanisch vorverdichtet und danach in einer oder mehreren übereinander angeordneten Schichten unter harzhärtenden Bedingungen erhitzt und verpresst. Die Matten besitzen im allgemeinen schon das erwünschte Plattenformat, andernfalls werden aus den Matten die Platten mit den erforderlichen Abmessungen gefertigt. Wie schon erwähnt, bestehen die Teile 2 und 3 aus dem gleichen Material wie der vorgefertigte plattenförmige Kern 6, können jedoch auch aus verschiedenen Materialien gefertigt sein.

In Fig. 2 ist schematisch eine Ansicht einer geöffneten Presse gezeigt, die zwei Pressformen 12 und 16 aufweist. Die Pressform 12 ist als Matrize ausgebildet, in der je nach Bedarf eine Anzahl von Mulden vorhanden ist, die gleichmäßig, ungleichmäßig oder in Kombination gleich- und ungleichmäßig über die Fläche der Pressform 12 verteilt sind. Die Umrisse der Mulden sind kreis-, ellipsen- oder parabelförmig und die Abmessungen dieser Umrisse sind für die einzelnen Umrisse der gleichen Art im Allgemeinen unterschiedlich groß, können jedoch auch gleiche Größe besitzen. Die Tiefen der Mulden sind im Allgemeinen unterschiedlich groß. Die weitere Pressform 16 ist ein planebenes, d.h. glattes Pressblech, das weder Mulden noch Erhebungen aufweist. Zwischen den geöffneten Pressformen 12, 16 befindet sich der vorgefertigte Kern 6 und in der Pressform 12 die Teile 2 und 3. Die Pressformen 12 und 16 werden in Richtung der Pfeile P, P zusammengeführt und unter Wärmeanwendung und entsprechend hohem Druck werden zunächst der vorgefertigte Kern 6 und die Teile 2 und 3 miteinander verpresst. Die Teile 2 und 3 sind aus Kraft-Papier, Holz- und/oder Cellulosefasern oder einer Mischung aus Holz-und Cellulosefasern oder Festholz vorgefertigt. Danach wird die Presse geöffnet und zwei Dekorschichten 11, 11 auf die Oberflächen des Kerns 6 und den damit verbundenen Teilen 2, 3 aufgelegt. Es folgt das Schließen der Presse und eine weitere Heißverpressung. Die untere Dekorschicht 11 ist dabei länger als die obere Dekorschicht in Fig. 2, da sie eine größere Oberfläche als die obere Dekorschicht 11 abdecken muss. Die größere Oberfläche ergibt sich durch die auf einer Kernfläche 7 des Kerns 6 angebrachten Teile 2 und 3. Die Teile 2 und 3 haben weitgehend die gleichen Umrisse wie die Mulden der Pressform 12. Für die Hitzeverpressung sind zweckmäßigerweise beide Pressformen 12 und 16 in nichtgezeigter Weise elektrisch beheizbar. Die Temperatur während der Hitzeverpressung beträgt 130 bis 180 °C und der aufgewandte Druck liegt im Bereich von 60 bis 110 bar bei allen Herstellungsverfahren nach der Erfindung.

In Fig. 3 ist im Querschnitt eine fertige Pressstoffplatte 1 dargestellt, die Erhebungen 14 besitzt, die den Teilen 2 und 3 und deren Anordnung auf dem vorgefertigten Kern 6 entsprechen. Die Pressstoffplatte 1 ist beidseitig mit Dekorschichten 11, 11 ausgerüstet. Selbstverständlich kann auch nur eine Dekorschicht aufgebracht sein, falls dies erwünscht ist, d.h. es kann beim Pressvorgang entweder nur die untere oder nur die obere Dekorschicht 11 zwischen den Pressformen 12 und 16 gemäß Fig. 2 angeordnet werden. Die Rückseite 5 der Platte 1 ist planeben, während die Frontseite 4 die Erhebungen 14 aufweist, wobei Kuppen 9 und 10 die Scheitelpunkte der Erhebungen sind. Die Größe A der Querschnitte der Erhebungen 14 liegt zwischen 100 und 500 mm und der Abstand B zwischen Kuppen 9 und 10 benachbarter Erhebungen 14 beträgt 100 bis 800 mm. Die Erhebungen weisen unterschiedliche große Abmessungen in ihren Querschnitten auf, können aber auch bei ähnlicher Gestaltung gleich große Abmessungen besitzen. Die Höhendifferenz zwischen zwei Kuppen 9 und 10 beträgt 2 bis 10 mm.

Der in Fig. 2 gezeigte plattenförmige Kern 6 hat eine Dicke von 8 bis 20 mm, insbesondere von 8 bis 12 mm. Die maximale Länge einer Platte 1 kann bis zu 4400 mm und ihre maximale Breite bis zu 2400 mm betragen, jedoch sind Plattenabmessungen von 600 x 600 mm bis 3000 x 1800 mm bevorzugt.

Die in Fig. 3 gezeigte Platte 1 wird durch die Hitzeverpressung des Kerns 6 mit den Teilen 2 und 3 sowie nachfolgendem Aufbringen der Dekorschichten 11, 11 gemäß Figur 2 erhalten. Wie aus Fig. 2 ersichtlich ist, sind die Teile 2 und 3 mit der einen Kernfläche 7 verbunden, welche die gewölbte Frontseite 4 der Platte 1 bildet, während die Rückseite 5 der Platte 1 planeben geformt ist.

In Fig. 4 ist schematisch die Ansicht einer geöffneten Presse gezeigt, die ähnlich zu der Presse nach Fig. 2 ist, mit dem einen Unterschied, dass die glatte obere Pressform 16 der Fig. 2 durch eine Pressform 15 mit Mulden ersetzt ist. Die beiden Pressformen 12 und 15 sind als Matrizen ausgebildet, in denen je nach Bedarf jeweils eine Anzahl von Mulden vorhanden ist, die über die Fläche der Pressformen gleichmäßig, ungleichmäßig oder in Kombination gleich- und ungleichmäßig verteilt sind und die regelmäßig, unregelmäßig oder regel- und unregelmäßig ausgebildet sind. Zwischen den geöffneten Pressformen 12, 15 sind zwei Dekorschichten 11, 11 angeordnet, zwischen denen sich der vorgefertigte Kern 6 befindet. In den Mulden der Pressformen 12, 15 sind die Teile 2 und 3 angeordnet. Die Pressformen 12 und 15 werden in Richtung der Pfeile P, P zusammengeführt und unter Hitzeanwendung werden die Dekorschichten 11, 11 und der vorgefertigte plattenförmige Kern 6 mit den Teilen 2 und 3 miteinander verpresst. Die beiden Dekorschichten 11, 11 sind länger als der Kern 6, da sie auch die gewölbten Teile 2 und 3 mit abdecken müssen. Mit einer derartigen Pressung wird eine zweiseitig gewölbte 3D (dreidimensionale)-Platte gefertigt, die sowohl eine gewölbte Front- als auch eine gewölbte Rückseite besitzt. Selbstverständlich können die Teile 2 und 3 auch nur mit der einen Kernfläche 8 des Kerns 6 verbunden sein, welche die gewölbte Rückseite 5 einer Platte 1 bildet, während die Frontseite 4 der Platte 1 planeben geformt ist.

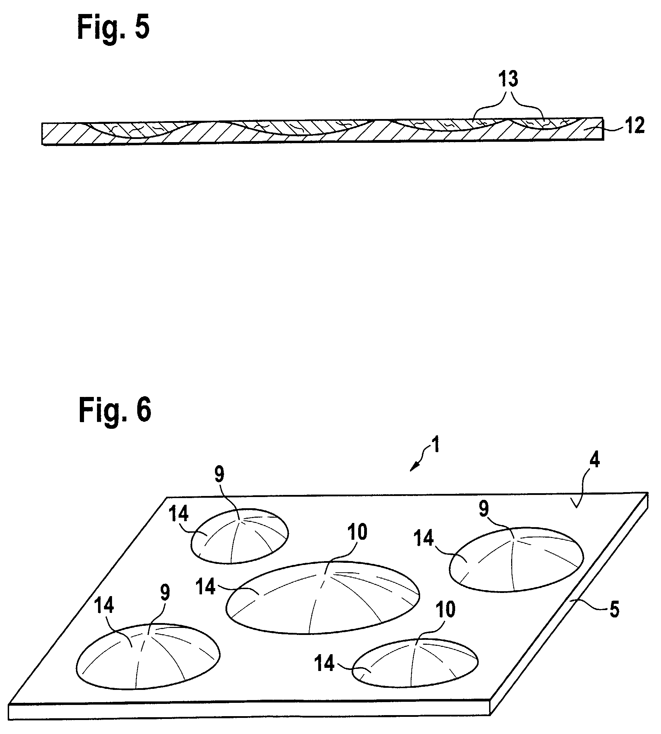

Anstelle von vorgefertigten Teilen 2 und 3 können als Material 13 zur Ausbildung der Erhebungen 14 der Platte 1 entweder lose Holz-, Cellulosefasern, Kraft-Papierschnitzeln oder miteinander vermischte Holz- und Cellulosefasern wie in Fig. 5 dargestellt, eingesetzt werden, die mechanisch verdichtet in die Mulden der Pressform 12 eingefüllt sind. Diese Holz-, Cellulosefasern, Kraft-Papierschnitzeln oder Mischungen aus Holz- und Cellulosefasern sind mit Phenol-Formaldehydharz imprägniert und besitzen die gleiche Zusammensetzung wie die für die Herstellung des vorgefertigten Kerns 6 verwendeten Materialien. Die Herstellung der Platte 1 erfolgt dabei in der Weise, dass nach dem Auffüllen der Mulden der vorgefertigte plattenförmige Kern 6 in die geöffnete Presse eingelegt wird, diese kurzzeitig geschlossen und solange mit Hitze und Druck beaufschlagt wird, bis die losen Fasern in den Mulden der Pressform 12 mit dem Kern fest verbunden sind. Danach wird die Presse geöffnet und je nach Bedarf eine oder zwei Dekorschichten 11 auf die Oberfläche (n) der Kerns 6 mit den damit verbundenen Teilen 2 und 3 aufgebracht. Danach wird die Presse wieder geschlossen und die Heißverpressung so lange fortgesetzt, bis eine entsprechende Platte 1, wie in Fig. 3 beispielweise gezeigt, hergestellt ist.

In die Mulden der Pressform 12 gemäß Fig. 5 können auch vorgefertigte Teile aus Festholz eingelegt werden, die dann mit einem entsprechenden plattenförmigen Kern aus Festholz in der Presse heißverpresst bzw. heißverklebt werden.

Bei den beschriebenen Verfahren kann auch eine Presse mit zwei planebenen Pressformen angewandt werden, um einen Kern mit planebenen Teilen unter Hitze- und Druckanwendung miteinander fest zu verbinden.

Insofern die Platte 1 eine heißverformte Pressstoffplatte ist, besitzt diese eine gleichmäßige Dichte im Bereich von 1,1 bis 1,8 g/cm³, insbesondere von 1,3 bis 1,5 g/cm³ über ihren Gesamtquerschnitt, d.h. auch unter Einschluß der Erhebungen 14. Die Dichte als auch die physikalischen und technischen Eigenschaften der Pressstoffplatte 1 sind weitgehend über den gewölbten und nichtgewölbten Bereich der Platte gleichmäßig ausgebildet.

Die Dekorschichten 11, 11 bestehen aus einer Kunststoff-, Papier- oder Holzlage, auf die eine Lackschicht aufgebracht ist und das Flächengewicht der Dekorschichten beträgt 60 bis 420 g/m², insbesondere 140 bis 300 g/m². Desweiteren können die Dekorschichten 11, 11 aus einem vernetzen Acryl-, Urethan-, Epoxid- oder Melaminharz bestehen, wobei das Acrylharz pigmentiert sein kann. Desweiteren können Füllstoffe oder Farbstoffe jeweils für sich oder gemeinsam als Additive dem Harz zugesetzt sein. In einer weiteren Ausführungsform bestehen die Dekorschichten 11, 11 aus Dekorpapieren, die mit Melamin beharzt sind. Insbesondere bei Bauplatten, aber auch bei Platten für den Innenbau sowie für die Verwendung in Labors enthält das zum Imprägnieren der Holz- und/oder Cellulosefasern verwendete Phenol-Formaldehydharz ein flammhemmendes Additiv.

Fig. 6 zeigt eine perspektivische Ansicht einer Platte 1 mit gewölbter Frontseite 4, die Erhebungen 14 mit Kuppen 9 bzw. 10 aufweist. Die Rückseite 5 der Platte 1 ist planeben. Bei Lichteinfall auf eine erfindungsgemäßenPlatte 1 ergeben sich auf Grund der verschiedenartigen Erhebungen 14 unterschiedliche Licht- und Reflexionsverhältnisse, sodass Farb-/ Schatteneffekte auftreten, die einen spezifischen optischen Eindruck vermitteln, der die monochromatische Farbe der Dekorschichten 11 auflöst und die gewölbte oder gewellte Oberfläche der Platte 1 im verstärkten Umfang erkenntlich macht.

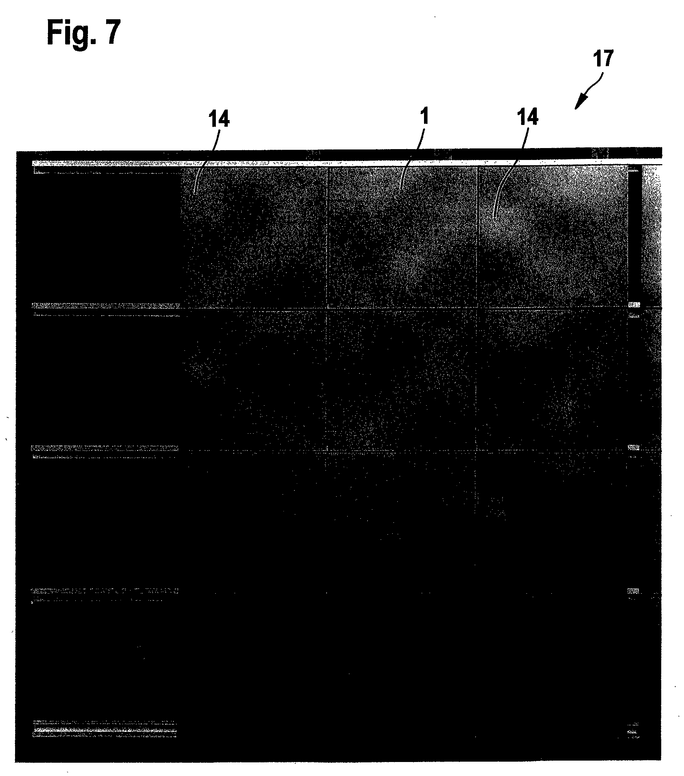

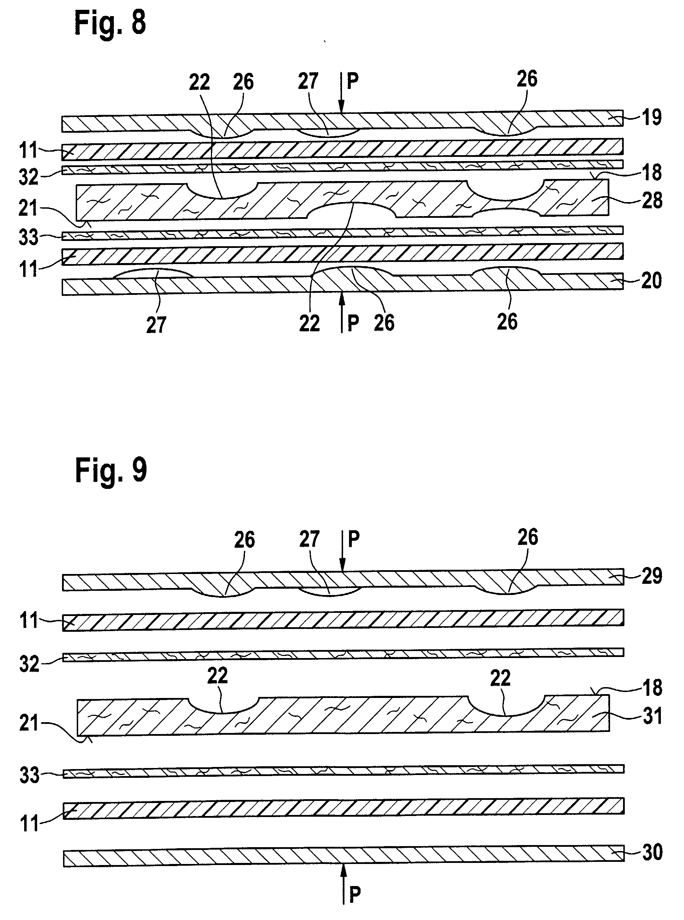

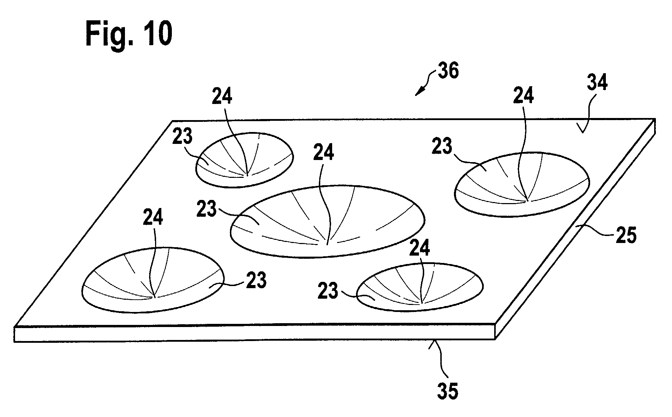

Fig. 7 zeigt eine Draufsicht auf eine Fassadenverkleidung 17, die aus einer Anzahl von erfindungsgemäßen Platten zusammengesetzt ist. Die einzelnen Platten haben beispielsweise eine durch Erhebungen 14 gewölbte oder gewellte Frontseite. Die für derartige Fassadenverkleidungen verwendeten Platten haben im Allgemeinen die Abmessungen 4400 x 2400 mm, wobei jedoch die Abmessungen 600 x 600 mm bis 3000 x 1800 mm bevorzugt sind.

Die Platten nach der Erfindung werden ebenso für die Verkleidung von Wänden in Innenräumen von Gebäuden oder als Raumtrennungswände verwendet.

## Patentansprüche

1. Platte aus einem planebenen Kern und mit diesem verbundenen gewölbten Teilen, wobei der Kern vorgefertigt ist und die Teile vorgefertigt oder durch Verpressen von losem Fasermaterial herstellbar sind und gegebenenfalls eine oder beiden Seiten der Platte mit einer Dekorschicht ausgerüstet sind, **dadurch gekennzeichnet, dass** die Teile (2, 3) regelmäßig, unregelmäßig oder regelmäßig und unregelmäßig gewölbt und gleichmäßig, ungleichmäßig oder gleichmäßig und ungleichmäßig über eine Front- und Rückseite (4, 5), die Front(4)- oder Rückseite (5) der Platte (1) verteilt sind.

2. Platte nach Anspruch 1, **dadurch gekennzeichnet, dass** das Material der Platte (1) Hochdrucklaminat (HPL) oder Holz ist.

3. Platte nach Anspruch 2, **dadurch gekennzeichnet, dass** der Kern (6) und die Teile (2, 3) aus dem gleichen Material oder aus verschiedenen Materialien bestehen.

4. Platte nach Anspruch 1, **dadurch gekennzeichnet, dass** die Teile (2, 3) mit der einen Kernfläche (7) verbunden sind, welche die gewölbte Frontseite (4) der Platte (1) bildet und dass die Rückseite (5) der Platte (1) planeben geformt ist.

5. Platte nach Anspruch 1, **dadurch gekennzeichnet, dass** die Teile (2, 3) mit jeder der beiden Kernflächen (7, 8) verbunden sind und derart eine gewölbte Front- und eine gewölbte Rückseite der Platte (1) formen.

6. Platte nach Anspruch 1, **dadurch gekennzeichnet, dass** die Teile (2, 3) mit der einen Kernfläche (8) verbunden sind, welche die gewölbte Rückseite (5) der Platte (1) bildet und dass die Frontseite (4) der Platte (1) planeben geformt ist.

7. Platte nach Anspruch 1, **dadurch gekennzeichnet, dass** die Teile (2, 3) aus Erhebungen (14) bestehen, die Grund-bzw. Basisflächen mit kreis-, ellipsen-, parabelförmigen Querschnitten und Kuppen (9, 10) als Scheitelpunkte der Erhebungen aufweisen.

8. Platte nach Anspruch 7, **dadurch gekennzeichnet, dass** die Größe (A) der Querschnitte der Erhebungen (14) 100 bis 500 mm beträgt.

9. Platte nach Anspruch 7, **dadurch gekennzeichnet, dass** die Erhebungen (14) gleich große oder unterschiedlich große Abmessungen aufweisen.

10. Platte nach Anspruch 7, **dadurch gekennzeichnet, dass** der Abstand (B) zwischen den Kuppen (9, 10) benachbarter Erhebungen (14) 100 bis 800 mm beträgt.

11. Platte nach Anspruch 7, **dadurch gekennzeichnet, dass** die Höhendifferenz zwischen zwei Kuppen (9, 10) 2 bis 10 mm beträgt.

12. Platte nach Anspruch 1, **dadurch gekennzeichnet, dass** der Kern (6) eine Dicke von 8 bis 20 mm, insbesondere von 8 bis 12 mm, eine maximale Länge bis zu 4400 mm, insbesondere von 600 bis 3000 mm und eine maximale Breite bis zu 2400 mm, insbesondere von 600 bis 1800 mm hat.

13. Platte nach Anspruch 1, **dadurch gekennzeichnet, dass** die Platte (1) eine heißverpresste Pressstoffplatte ist, deren Kern eine vorgefertigte planebene Platte aus Holz-, Cellulosefasern und/oder Kraft-Papier oder aus einer Mischung von Holz- und Cellulosefasern und/oder Kraft-Papierschnitzeln ist, wobei die jeweiligen Fasern mit hitzegehärtetem Phenol-Formaldehydharz imprägniert sind und dass die planebene Platte mit vorgefertigten gewölbten Teilen (2, 3) aus Holz- und/oder Cellulosefasern und/oder Kraft-Papier unter Druck heißverpresst ist.

14. Platte nach Anspruch 13, **dadurch gekennzeichnet, dass** sie eine Dichte im Bereich von 1,1 bis 1,8 g/cm³, insbesondere von 1,3 bis 1,5 g/cm³ über ihren Gesamtquerschnitt aufweist.

15. Platte nach einem der Ansprüche 12 bis 14, **dadurch gekennzeichnet, dass** das Phenol-Formaldehydharz einen flammhemmenden Zusatz enthält.

16. Platte nach Anspruch 1, **dadurch gekennzeichnet, dass** die Dekorschicht (11) aus einer Kunststoff-, Papier- oder Holzlage besteht, auf die eine Lackschicht aufgebracht istund dass die Dekorschicht ein Flächengewicht von 60 bis 420 g/m², insbesondere von 140 bis 300 g/m² hat.

17. Platte nach Anspruch 1, **dadurch gekennzeichnet, dass** die Dekorschicht (11) aus einem vernetzten Acryl-, Urethan-, Epoxid- oder Melaminharz besteht, dass das Acrylharz pigmentiert ist und dass Füllstoffe oder Farbstoffe oder Füll- und Farbstoffe dem Harz beigefügt sind.

18. Platte nach Anspruch 1, **dadurch gekennzeichnet, dass** die Dekorschicht ein mit Melaminharz imprägniertes Dekorpapier ist.

19. Platte nach Anspruch 1, **dadurch gekennzeichnet, dass** das Material für die gewölbten Teile (2, 3) aus losen mit Harz imprägnierten Holz- und/oder Cellulosefasern und/oder Kraft-Papierschnitzeln oder aus einer Mischung aus Holz-, Cellulosefasern und/oder Kraft-Papierschnitzeln besteht, die in Mulden einer Pressform (12) eingefüllt sind, zwischen der und einer weiteren Pressform (15) der vorgefertigte planebene plattenförmige Kern (6) und das lose Material in den Mulden miteinander heiß verpresst sind und dass eine oder zwei Dekorschichten (11) auf den Kern (6) und den damit verbundenen Teilen (2, 3) auflaminiert sind.

20. Verkleidung von Fassaden und Wänden, zusammengesetzt aus einer Anzahl von Platten gemäß den Ansprüchen 1 bis 19.

21. Verkleidung im Inneren eines Gebäudes, zusammengesetzt aus einer Anzahl von Platten gemäß den Ansprüchen 1 bis 19.

22. Verfahren zur Herstellung einer Platte nach einem der Ansprüche 1 bis 19, **gekennzeichnet durch** Einlegen eines vorgefertigten planebenen Kerns (6) aus Kraft-Papier, Holzfasern, Cellulosefasern und/oder Festholz oder einem Gemisch aus Holz- und Cellulosefasern in eine geöffnete Presse, von der beide Pressformen (12, 15) Mulden aufweisen, Auffüllen der Mulden mit vorgefertigten Teilen (2, 3) aus Kraft-Papier, Holzfasern, Cellulosefasern und/oder Festholz oder losen harzimprägnierten Holzfasern, Cellulosefasern und/oder Kraft-Papierschnitzeln oder einem Gemisch aus harzimprägnierten Holz- und Cellulosefasern, Schließen der Presse und Heißverpressen aller in der Presse befindlichen vorgefertigten Teile oder losen harzimprägnierten Fasern mit dem Kern, Öffnen der Presse, Anordnen einer oder zweier Dekorschicht(en) an einer bzw. beiden Seiten des Kerns und den damit verbundenen Teilen und anschließendes Schließen der Presse und Hitzeverpressen der Dekorschicht(en) mit dem Kern und den damit verbundenen Teilen zu einer zweiseitig gewölbten 3D-Platte.

23. Verfahren zur Herstellung einer Platte nach einem der Ansprüche 1 bis 19, **gekennzeichnet durch** Einlegen eines vorgefertigten planebenen Kerns (6) aus Kraft-Papier, Holzfasern, Cellulosefasern und/oder Festholz oder einem Gemisch aus Holz- und Cellulosefasern in eine geöffnete Presse, von der eine Pressform (12) Mulden aufweist und die andere Pressform (16) planeben ist, Einbringen von vorgefertigten Teilen (2, 3) aus Kraft-Papier, Holzfasern, Cellulosefasern und/oder Festholz oder einem Gemisch aus Holz- und Cellulosefasern in die Mulden oder Auffüllen der Mulden mit losen harzimprägnierten Holzfasern, Cellulosefasern und/oder Kraft-Papierschnitzeln, Schließen der Presse und Heißverpressen aller in der Presse befindlichen Teile mit dem Kern, Öffnen der Presse, Anordnen einer oder zweier Dekorschicht(en) an einer bzw. beiden Seiten des Kerns und den damit verbundenen Teilen und anschließendes Schließen der Presse und Hitzeverpressen von Dekorschicht(en), Kern und den damit verbundenen Teilen zu einer einseitig gewölbten 3D-Platte.

24. Verfahren zur Herstellung einer Platte nach einem der Ansprüche 1 bis 19, **gekennzeichnet durch** Einlegen einer oder je einer Dekorschicht (11, 11) in eine oder in jede derbeiden mit Mulden ausgestatteten Pressformen (12, 15) einer geöffneten Presse, Auffüllen der Mulden jeder der beiden Pressformen (12, 15) mit vorgefertigten Teilen (2, 3) aus Kraft-Papier, Holzfasern, Cellulosefasern und/oder Festholz oder Mischungen aus Holz- und Cellulosefasern oder Auffüllen mitlosenharzimprägniertenHolz-, Cellulosefasern und/oder Kraft-Papierschnitzeln oder miteinander vermischten harzimprägnierten Holz-und Cellulosefasern, Einlegen eines vorgefertigten planebenen Kerns (6) aus dem gleichen oder aus unterschiedlichem Material, welches in die Mulden eingefüllt ist, Schließen der Pressformen (12, 15) und Hitzeverpressen von Deckschicht(en), Kern, vorgefertigten Teilen bzw. losen harzimprägnierten Fasern zu einer zweiseitig gewölbten 3D-Platte.

25. Verfahren zur Herstellung einer Platte nach einem der Ansprüche 1 bis 19, **gekennzeichnet durch** Einlegen einer oder je einer Dekorschicht (11, 11) in eine oder in jede der beiden Pressformen (12, 15 bzw. 16) einer geöffneten Presse, von denen eine Pressform (12) planeben und die andere Pressform (15) Mulden aufweist, Auffüllen der Mulden der einen Pressform (15) mit vorgefertigten Teilen (2, 3) aus Kraft-Papier, Holzfasern, Cellulosefasern und/oder Festholz oder Mischungen aus Holz- und Cellulosefasern oder Auffüllen mit losen harzimprägnierten Holz-, Cellulosefasern und/oder Kraft-Papierschnitzeln oder miteinander vermischten harzimprägnierten Holz- und Cellulosefasern, Einlegen eines vorgefertigten planebenen Kerns (6) aus dem gleichen oder aus unterschiedlichem Material, welches in die Mulden der einen Pressform eingefüllt ist, Schließen der Pressformen und Hitzeverpressen von Deckschicht(en), Kern, vorgefertigten Teilen bzw. losen harzimprägnierten Fasern zu einer einseitig gewölbten 3D-Platte.

26. Verfahren nach einem der Ansprüche 1 bis 19, **gekennzeichnet durch gekennzeichnet durch** Einlegen einer oder je einer Dekorschicht (11, 11) in eine oder in jede der beiden planebenen Pressformen einer geöffneten Presse, Einlegen von planebenen vorgefertigten harzimprägnierten Teilen und eines dazwischen befindlichen planebenen, harzimprägnierten Kerns aus dem gleichen oder aus unterschiedlichem Material, wie die vorgefertigten Teile, Schließen der Pressformen und Hitzeverpressen vonDeckschicht/ein), vorgefertigten Teilen und Kern zu einer beidseitig planparallelen Platte.

27. Verfahren nach einem der Ansprüche 20 bis 26, **dadurch gekennzeichnet, dass** die Materialien in der Presse mit einer Temperatur von 130 bis 180 °C und einem Druck von 60 bis 110 bar verpresst werden.
